# EUROPEAN PATENT SPECIFICATION

(11) **EP 2 793 614 B1**
(45) Date of publication and mention of the grant of the patent: **22.11.2017**
(21) Application number: 12819152.5
(22) Date of filing: 19.12.2012
(51) Int. Cl.: A23L 2/66, A23J 3/22, A23J 3/08, A23L 29/25, A23L 33/185, A23L 33/19

(54) **DISPERSION COMPRISING PROTEIN PARTICLES, FOOD PRODUCT COMPRISING SUCH DISPERSION AND USE OF SUCH DISPERSION**
DISPERSION MIT PROTEINPARTIKELN, LEBENSMITTELPRODUKT MIT EINER SOLCHEN DISPERSION UND VERWENDUNG EINER SOLCHEN DISPERSION
DISPERSION COMPORTANT DES PARTICULES DE PROTÉINE, PRODUIT ALIMENTAIRE COMPORTANT UNE TELLE DISPERSION ET UTILISATION DE CETTE DISPERSION

(30) Priority: 21.12.2011 EP 11194973
(43) Date of publication of application: 29.10.2014
(73) Proprietor: FrieslandCampina Nederland B.V., 3818 LE Amersfoort (NL)
(72) Inventor: SAGLAM, Dilek, NL-6702 CN Wageningen (NL); VENEMA, Paul, NL-6701 EC Wageningen (NL); DE VRIES, Rindert Jakob, NL-6866 EV Heelsum (NL); VAN DER LINDEN, Erik, NL-6717 XC Ede (NL)
(74) Representative: Nederlandsch Octrooibureau
(86) International application number: PCT/NL2012/050904
(87) International publication number: WO 2013/095131

(56) References cited:
- WO-A1-94/14334
- WO-A1-2010/077137
- US-A- 5 021 248
- US-A1- 2008 050 497
- C. SCHMITT ET AL: "Complex coacervation between [beta]-lactoglobulin and acacia gum in aqueous medium", FOOD HYDROCOLLOIDS, vol. 13, no. 6, 1 November 1999 (1999-11-01), pages 483-496, XP55059978, ISSN: 0268-005X, DOI: 10.1016/S0268-005X(99)00032-6
- KLEIN M ET AL: "Interactions between whey protein isolate and gum Arabic", COLLOIDS AND SURFACES. B, BIOINTERFACES, ELSEVIER, AMSTERDAM, NL, vol. 79, no. 2, September 2010 (2010-09), pages 377-383, XP027095607, ISSN: 0927-7765 [retrieved on 2010-06-18]
- DE KRUIF C G ET AL: "Complex coacervation of proteins and anionic polysaccharides", CURRENT OPINION IN COLLOID AND INTERFACE SCIENCE, LONDON, GB, vol. 9, no. 5, 1 December 2004 (2004-12-01), pages 340-349, XP004668055, ISSN: 1359-0294, DOI: 10.1016/J.COCIS.2004.09.006
- KLEIN M ET AL: "Enhanced stabilization of cloudy emulsions with gum Arabic and whey protein isolate", COLLOIDS AND SURFACES. B, BIOINTERFACES, ELSEVIER, AMSTERDAM, NL, vol. 77, no. 1, 1 May 2010 (2010-05-01), pages 75-81, XP026935197, ISSN: 0927-7765, DOI: 10.1016/J.COLSURFB.2010.01.008 [retrieved on 2010-03-03]
- F. WEINBRECK ET AL: 'Composition and Structure of Whey Protein/Gum Arabic Coacervates' BIOMACROMOLECULES vol. 5, no. 4, 01 July 2004, pages 1437 - 1445, XP055026861 DOI: 10.1021/bm049970v ISSN: 1525-7797

## Description

### Field of the invention

The present invention relates to an edible liquid dispersion comprising protein particles, to a food product comprising such dispersion, and to use of such dispersion.

### Background of the invention

There is a need for food products with a high protein content, in particular for liquid food products such as clinical food or high protein drinks such as sport drinks. It is, however, difficult to produce food products with a high protein content that are heat and/or shelf stable. Since proteins typically show denaturation behaviour upon heat treatment, liquids with a relatively high protein content will typically form a gel upon heat treatment. Also, many high protein liquids show undesired shear thickening behaviour, in particular after heat treatment.

In the prior art, native micellar casein is typically used as protein to prepare heat stable liquid food products. In WO2009/072885 is disclosed a liquid enteral nutritional composition comprising 6 to 14 grams of protein per 100 ml wherein the protein includes micellar casein and caseinate. Since micellar casein is quite bulky, it is difficult to manufacture food products with micellar casein with a high protein content. A further disadvantage of micellar casein is that it is not stable at low pH, since gelation of micellar casein already occurs at a relatively high pH value.

The use of denatured, heat stable protein particles in liquid food products has been described. In WO2010/077137 for example, a process for the preparation of denatured and gelled protein particles is described. Dispersions of protein particles prepared according to the process as described in WO2010/077137 appear, however, not to be stable in the sense that they show shear thickening behavior after being subjected to a heat treatment.

### Summary of the invention

It has now been found that if whey protein is dispersed as particles in an aqueous phase that comprises gum arabic, a dispersion with a relatively high protein content can be obtained that does not show shear thickening behaviour after heat treatment.

A first aspect of the present invention relates to an edible liquid dispersion comprising 10-40 vol.% aggregated protein particles in an aqueous phase comprising 0.05 to 5 wt% gum arabic, said aggregated protein particles comprising 5 to 70 wt% of protein and having an average diameter in the range of 0.1 to 20 µm, wherein said aggregated protein particles comprise gelled whey protein and wherein the pH of the edible dispersion is 6 to 9.

An important advantage of the dispersion according to the invention is its heat and shelf stability.

A second aspect of the present invention relates to a method for preparing such an edible dispersion.

Since the dispersion according to the invention does not show significant shear thickening behaviour, even not after heat treatment of the dispersion, the dispersion can suitably be used as a food product, in particular as a liquid food product with a relatively high protein content such as a liquid clinical food or high-protein sport drinks. Accordingly, the invention further relates to a food product comprising the dispersion as hereinbefore defined.

The food product according to the invention may be the dispersion as such. Alternatively, the food product may comprise the dispersion and additional further food ingredients.

The dispersion according to the invention can suitably be used for increasing the protein content of a food product. Accordingly, the invention relates in a further aspect to use of the dispersion as hereinabove defined for increasing the protein content of a food product.

### Summary of the drawings

The Figure shows the viscosity as a function of shear rate for three different liquid dispersions A, B, and C of protein particles in an aqueous phase, before and after heat treatment. Dispersion A (not according to the invention) is a dispersion of gelled whey protein particles in an aqueous phase comprising 1 wt% sodium caseinate. Dispersion B (not according to the invention) is a dispersion of gelled whey protein particles in an aqueous phase comprising 1 wt% whey protein isolate. Dispersion C (according to the invention) is a dispersion of gelled whey protein particles in an aqueous phase comprising 1 wt% gum arabic.

### Detailed description of the invention

The dispersion according to the invention is a liquid dispersion of protein particles in an aqueous phase comprising gum arabic.

Reference herein to protein particles is to particles comprising protein in a solidified, i.e. aggregated state, for example aggregated by gelation or by another means of aggregation. Preferably, the protein in aggregated state does not or not substantially dissolve in the continuous phase, i.e. in the aqueous phase comprising gum arabic. Reference herein to not substantially dissolving is to dissolution of less than 1 wt% of the protein within 24 hours at a temperature of 20 °C.

The protein particles may be any particles of solidified protein, preferably of heat-gelated protein or of a protein that is aggregated by other means of aggregation such as acidification, enzymatic treatment of by means of chemical cross-linking. The protein particles are particles comprising gelled whey protein.

The protein particles may comprises one or more proteins. Reference herein to proteins is to a polypeptide having at least 10 amino acid units. Preferably, the protein particles comprise proteins having at least 20 amino acid units, more preferably at least 50, even more preferably at least 100 amino acids.

The protein is an edible protein.

The protein particles in the dispersion according to the invention may have any suitable shape. Preferably, the shape is such that the dispersion is still liquid at a relatively high volume percentage of the protein particles, for example up to 40 vol%.

Preferably, the ratio of the largest and the smallest diameter of the particles is below 1.5, more preferably below 1.2. Substantially spherical particles are particularly preferred. Reference herein to substantially spherical is to spherical or near spherical particles with a ratio of its largest and smallest diameter below 1.1. The particles may have a smooth or a rough surface.

The protein particles may have an average particle diameter in the range of from 0.1 to 20 µm, more preferably of from 1 to 10 µm.

The protein content of the protein particles is at least 5 wt%, preferably at least 8 wt%, more preferably at least 15 wt%, still more preferably at least 25 wt%. The protein content is at most 70 wt%, more preferably at most 50 wt%. A description of the procedure used to determine the protein content of the protein particles has been described in detail in Saglam et al., 2011 in Food Hydrocolloids, 25 (2011) 1139-1148, paragraph 2.7.

The pH of the dispersion is 6 to 9. It has been found that at lower pH particle clustering may take place. At a pH higher than 6, preferably higher than 7 such clustering is substantially avoided as has shown in more detail in the examples. The pH is lower than 9, more preferably lower than 8, most preferably the pH is 6.5 to 8.

The aqueous phase of the dispersion comprises of from 0.05 to 5 wt% gum arabic. Preferably, the aqueous phase comprises of from 0.2 to 2 wt% gum arabic based on the weight of the aqueous phase. The pH of the dispersion is 6 to 9, preferably 6.5 to 8.

A particular suitable edible protein dispersion is obtainable by the process according to the present invention, which process comprises the following steps:
a) providing a solution or dispersion of whey proteins in a solvent;
b) providing an oil comprising an emulsifier;
c) preparing a solvent-in-oil emulsion comprising dispersed droplets of the solution or dispersion of protein by adding the solution or dispersion of protein provided in step (a) to the oil provided in step (b) and mixing the solution or dispersion with the oil;
d) treating the emulsion obtained in step (c) to cause aggregation of the protein to obtain a treated emulsion comprising aggregated protein particles in an oil phase;
e) removing oil from the treated emulsion; and
f) dispersing the protein particles in a solution of gum arabic in water such that a dispersion is obtained comprising 10-40 vol.% aggregated protein particles and 0.05 to 5 wt% gum arabic.

A similar process is described in detail in International Patent publication WO2010/077137. However in this international patent application the use of gum arabic is not described nor suggested.

In step a) of the process according to the invention, a solution or dispersion of whey proteins in a solvent is provided. The solvent may be any solvent that is immiscible with oil so that a solvent-in-oil emulsion can be formed in step (c). Preferably, the solvent is water. Preferably, a solution of protein is provided. Alternatively, the protein is not dissolved or not entirely dissolved in the solvent and a dispersion is provided.

The protein solution or dispersion may comprise one or more different proteins. The protein concentration in the solution or dispersion is such that the protein can be caused to aggregate in step (d) and will thus *inter alia* depend on the type of protein used.

Whey proteins for example can be caused to aggregate as from a concentration of 8 to 9 wt%.

For processability reasons, the solution or dispersion preferably does not comprise more than 50 wt% protein, more preferably not more than 40 wt%.

In step (b) of the process, an oil comprising an emulsifier is provided. Reference herein to oil is to a liquid oily phase. The oil may comprise one or more oils, preferably food-grade oils, that are liquid at a temperature in the range of from 20 to 80 °C, preferably of from 20 to 50 °C. Examples of suitable oils include vegetable oil such as corn oil, sunflower oil, soybean oil, canola oil, rapeseed oil, olive oil, walnut oil, or peanut oil, algal oil, fish oil, and molten animal fat. In addition, the oil may further comprise natural and/or synthetic lipid components, including but not limited to saturated and unsaturated fatty acids, glycerol, glycerides, phospholipids, glycolipids, phytosterol and/or sterol esters.

The oil comprises an emulsifier. The emulsifier may be any emulsifier that is to some extent soluble in the oil and is suitable of emulsifying the solvent into oil. The emulsifier is preferably food-grade. Preferably, the emulsifier has a low hydrophilic-lipophilic balance (HLB) value. Examples of suitable emulsifiers are polyglycerol polyricinoleate (PGPR; E476), lecithin and esters of sorbitan that are known as "Spans". Polyglycerol polyricinoleate is a particularly preferred emulsifier. The emulsifier may be present in any functionally effective amount. For polyglycerol polyricinoleate, such functionally effective amount is typically in the range of from 1 to about 10 wt%, based on the weight of oil. Further, it is to be noted that commercially available oil preparations may comprise emulsifiers as contaminants. In such case, the contaminant may serve as the emulsifier.

In step (c), a solvent-in-oil emulsion is prepared by adding the solution or dispersion of protein provided in step a) to the oil provided in step b) and mixing the solution or dispersion with the oil. Thus, an emulsion is obtained with the solution or dispersion being the discontinuous phase and the oil being the continuous phase. The weight ratio of oil to solvent in the emulsion preferably is in the range of from 95% : 5% (w/w) to 45% : 55% (w/w). More preferably, in the range of from 10 to 55 wt% solvent is dispersed in the oil phase, based on the weight of the oil phase.

Thus, dispersed droplets of protein solution or dispersion in an oil phase are formed. The mixing is performed such that the dispersed droplets of protein solution or dispersion have a volume-to-surface mean particle diameter (d32 or Sauter mean diameter) in the range of from 0.1-20 µm, more preferably of from 1 to 10 µm. The volume-to-surface mean particle diameter may be determined by means known in the art such as direct light microscopy, confocal laser scanning microscopy, or static light scattering.

In step (d), the emulsion obtained in step (c) is treated to cause aggregation of the proteins. Aggregation of proteins typically occurs by cross-linking the proteins. Such cross-linking may for example be effected by heating, acidification, enzyme treatment, using chemical cross-linking agents or combinations thereof. Any suitable treatment that causes aggregation of the proteins may be applied.

Preferably, in particular in case the proteins are globular proteins, the emulsion is heated to a temperature above the thermal denaturation temperature of the protein. In case the protein is caused to aggregate by acidification, the emulsion may be treated in step (d) to cause lowering of the pH of the dispersed droplets, for example by adding an acidifier, preferably an oil-soluble acidifier.

Alternatively, a compound is used that slowly releases acid, such as for example glucono delta lactone. Such compound may for example be added to the starting solution or dispersion. Step (d) then comprises allowing time to pass in order to allow the glucono delta lactone to release sufficient acid for aggregation to occur.

Aggregation by means of enzymes may for example be carried out by adding enzymes to the starting solution or dispersion of protein. The treating in step (d) may then comprise allowing time to pass in order to allow the enzymes to cause aggregation of the proteins.

Thus, particles of solidified protein are obtained. Typically, the protein in each droplet of protein solution or dispersion will aggregate and each droplet will form a particle of solidified protein. Thus, a dispersion of particles of solidified protein in an oil phase is formed. The size of the protein particles will typically be comparable to the size of the droplets in the emulsion, although shrinking or swelling effects will result in somewhat larger or smaller particles. The protein particles thus obtained will have an average diameter in the range of from 0.1 to 20 µm, more preferably of from 1 to 10 µm. The particles thus-formed will typically have a shape that is comparable to the shape of the droplets. Typically, the particles will be substantially spherical.

A dispersion according to the invention is obtainable from protein particles obtained by steps (a) to (d) by first removing oil from the treated emulsion and then redispersing the protein particles in a solution of gum arabic in water.

Thus, the dispersion is obtainable by a process comprising step (a) to (d) as hereinabove described and further comprising the following steps:
(e) removing oil from the treated emulsion; and
(f) dispersing the protein particles in a solution of gum arabic in water such that a dispersion is obtained comprising 10-40 vol.% aggregated protein particles and 0.05 to 5wt% gum arabic.

The oil may be removed from the emulsion by any suitable means known in the art, such as by first separating the main part of the oil from the protein particles by means of centrifugation followed by removal of the separated upper oil layer. Alternatively, the oil may be removed from the protein particles by means of extraction with a suitable solvent, for example hexane or supercritical carbon dioxide.

Preferably, the oil is removed by first subjecting the treated emulsion to centrifugation and then removing the upper oil layer thus created.

A pellet comprising protein particles is thus obtained. In case a dispersion with a minimum amount of oil is desired, it is preferred to wash the protein particles obtained after a first oil removal step (by centrifugation, extraction, or otherwise) with an aqueous solution of an emulsifier, preferably a solution of gum arabic in water, followed by a centrifugation step to separate and remove emulsified oil particles. Such washing and centrifugation steps may be repeated.

The protein particles obtained after removal of oil from the treated emulsion are dispersed in a solution of gum arabic in water to obtain a dispersion of protein particles in an aqueous solution according to the invention.

The dispersing of protein particles may be done by any suitable techniques known in the art. Typically the solution of gum arabic will be added to the protein particles followed by subjecting the solution of gum arabic with protein particles to sufficient agitation to obtain a dispersion, for example by high speed mixing or by passing the solution comprising 10 - 40 vol.% of the aggregated protein particles through a homogenizer

The dispersion according to the invention comprises protein particles in an aqueous phase comprising gum arabic. The aqueous phase comprises in the range of from 0.05 to 5 wt% gum arabic, more preferably of from 0.2 to 2 wt%, based on the weight of the aqueous phase. It will be appreciated that the optimum concentration of gum arabic will depend on the volume fraction of protein particles in the dispersion.

The dispersion may comprise any suitable quality of gum arabic, preferably a food-grade gum arabic. Suitable gum arabic is commercially available.

The pH of the dispersion comprising the gum arabic is preferably adjusted to 6 or higher, more preferably 7 or higher. It has been found that at lower pH particle clustering may take place. At a pH higher than 6, preferably higher than 7 such clustering is substantially avoided as has been shown in more detail in the examples. Preferably, the pH is lower than 9, more preferably lower than 8, most preferably the pH is 6.5 to 8.

Preferably, the dispersion according to the invention has a viscosity in the range of from 1 to 100 mPa.s at a shear rate of 100 s⁻¹ at 25 °C, more preferably of from 1 to 10 mPa.s at a shear rate of 100 s⁻¹ at 25 °C.

The dispersion may comprise 10 - 40 vol.% of the aggregated protein particles. It will be appreciated that the upper limit of the particle concentration will be determined by the content at which the dispersion will reach close packing, i.e. the point at which the viscosity will diverge to infinity. Therefore, the dispersion may comprise up up to 40 vol% protein particles. The dispersion comprises at least 10 vol%, more preferably at least 15 vol%, even more preferably at least 20 vol% of the aggregated protein particles. A content of in the range of from 15 to 40 vol% protein particles is particularly preferred.

The dispersion according to the invention or obtainable by the above mentioned method may comprise components other than protein particles, gum arabic and water. The dispersion may for example comprise further protein dissolved in the continuous aqueous phase, oil, or other food ingredients. The dispersion may have any suitable protein content. Preferably, the total protein content of the dispersion is at least 7 wt%, more preferably at least 15 wt%.

The dispersion according to the invention may be a food product as such, for example a clinical food product such as a high protein nutritional composition for enteral administration. The dispersion may also form part of a food product that also comprises further ingredients.

The food product according to the invention, i.e. a food product comprising the dispersion according to the invention, may comprise the dispersion and additional further food ingredients, such as for example fat, carbohydrates, additional proteins and further nutrients such as for example vitamins, flavours and other additives.

The dispersion according to the invention may advantageously be used to increase the protein content of a food product, such as for example high-protein sport drinks. Alternatively, the dispersion may be used in food products with a very low protein content.

The food product preferably has a protein content (total of protein in dispersion and further protein) of at least 7 wt%, more preferably at least 15 wt%. The food product will preferably comprise at most 25 wt% protein, more preferably at most 20 wt%.

The invention is further illustrated by means of the following non-limiting examples.

### Examples

### EXAMPLE 1 - Preparation of dispersions

A solution of 25 wt% whey protein isolate (WPI) in water was prepared by dispersing a whey protein isolate powder (BiPro JE 034-7-440-1, ex. Davisco Foods International Inc., Minnesota, USA) comprising beta-lactoglobulin and alpha-lactalbumin in water and then stirring overnight to dissolve the powder. The solution had a pH value of 6.8. An oil with an emulsifier was provided by dissolving 2.5 wt% polyglycerol polyricinoleate (PGPR 90, ex. Grindsted, Denmark) in food-grade sunflower oil.

A water-in-oil emulsion was prepared by adding 30 grams of the 25 wt% WPI solution to 70 grams of the sunflower oil whilst mixing with a high speed mixer (Ultra-turrax T25, ex. IKA Werke, Germany) at a speed of 6,500 RPM and continuing mixing at this speed during 5 minutes. The water-in-oil emulsion was then heated to a temperature of 80 °C and maintained at this temperature for 20 minutes in order to cause gelation of the whey proteins. The emulsion was then centrifuged at a speed of 33,768 times g during one hour. After centrifugation, excess oil was removed by decanting the upper layer. The resultant pellet of protein particles was washed with a solution of 1 wt% emulsifier (sodium caseinate, whey protein isolate or gum arabic) in water in order to disperse remaining oil in an aqueous continuous phase. The thus-obtained oil-in-water emulsion was centrifuged to separate oil droplets from the continuous phase and the upper layer of oil thus obtained was removed. The washing and oil removal was repeated two times (three washings in total). The pellet obtained after the third centrifugation was dispersed in a solution of 1 wt% of the same emulsifier in water to obtain a liquid dispersion with 35 vol% gelled whey protein particles.

In three different experiments, a dispersion was prepared as described hereinabove. In each experiment, a different emulsifier was used for washing/redispersing the gelled whey protein particles. In Experiment A, sodium caseinate was used; in Experiment B whey protein isolate (WPI); and in Experiment C gum arabic.

SEM images of the protein particles in the dispersions showed that the particles were spherical in shape and had an average particle diameter in the order of a few microns.

| Experiment | Emulsifier | Source of emulsifier |
|---|---|---|
| A (comparison) | sodium caseinate | ex. DMV International, Veghel, The Netherlands |
| B (comparison) | whey protein isolate (WPI) | BiPro JE 034-7-440-1, ex. Davisco Foods International Inc., Minnesota, USA |
| C (invention) | gum arabic | ex. Merck Chemicals, Darmstadt, Germany |

### EXAMPLE 2 - Heat stability

The liquid dispersions of 35 vol% protein particles prepared in EXAMPLE 1 were subjected to a temperature of 90 °C during 30 minutes. The shear viscosity and the particle size distribution of the dispersions prior and after heat treatment were determined. The shear viscosity was determined by measuring the viscosity at different share rates by using a Physica MCR 501 Rheometer. 5 ml of the dispersion was placed in the measuring cell of the rheometer and the surface of the sample was covered with paraffin oil. The shear viscosity of the samples was measured over the shear range of from 1 to 1,000 s⁻¹ at 25 °C. The particle size distribution was determined by means of light scattering.

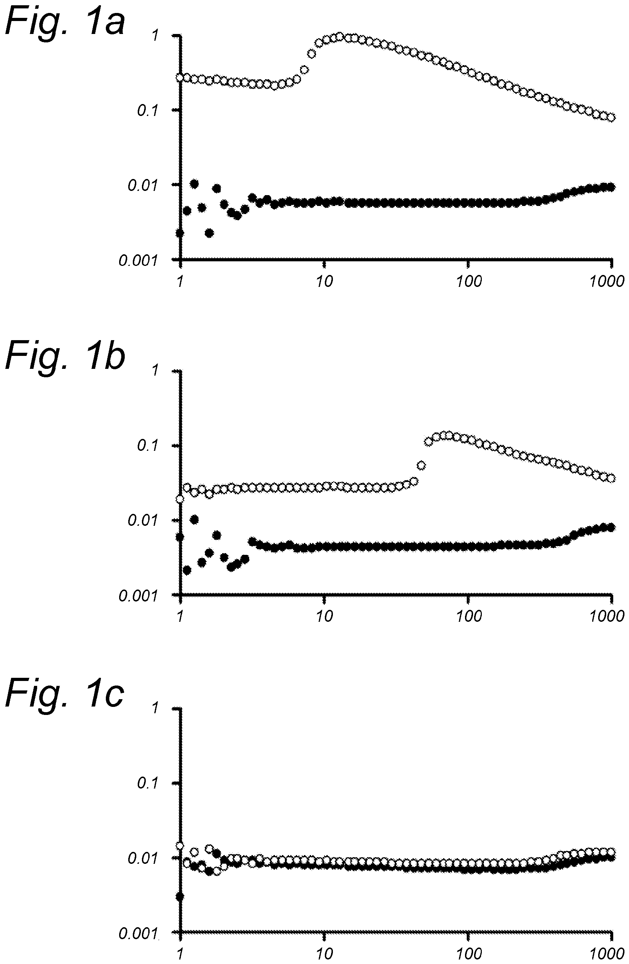

Both the dispersions with sodium caseinate and with WPI showed a slight increase in particle size after heat treatment. The dispersion with gum arabic did not show an increase in particle size after heat treatment. In the Figure, the viscosity (in Pa.s) as a function of shear rate (in s⁻¹) is shown both prior to heat treatment and after heat treatment for the dispersions with 1 wt% sodium caseinate (A; see Fig. 1a), 1 wt% WPI (B; see Fig. 1b) and 1 wt% gum arabic (C; see Fig. 1c). Prior to heat treatment, all dispersions showed Newtonian behaviour. After heat treatment, the dispersion with sodium caseinate showed shear thickening at a shear rate of about 6 s⁻¹. In the dispersion with WPI, shear thickening occurred at a shear rate of about 40 s⁻¹. The dispersion with gum arabic showed Newtonian behavior (no shear thickening) after heat treatment.

It can thus be concluded that a dispersion of solid protein particles comprising gum arabic shows improved heat stability compared to dispersions of solid protein particles with other stabilisers.

### EXAMPLE 3 - Varying Gum Arabic concentrations

A dispersion of protein particles was prepared as described in example 1. During the washing and dispersing steps (including final dispersing) a Gum Arabic (GA) solution of either 0.5, 1 or 2 % (w/w) was used. The final pH of the dispersions was adjusted to pH 7.00 (using 2M NaOH). Then, the samples were stirred 30 min at room temperature. The heat stability of these samples were tested as described Example 2 above.

No change was observed in the size distribution (D [3,2] : 3.8 µm) of particles prepared with 1% GA before and after heating. A very small change was observed for the other GA concentrations. In the case of 0.5% GA, D[3,2] was increased from 3.6 to 3.8 µm upon heating and decreased from 4.6 to 4.4 µm upon heating, when 2% GA was used.

Furthermore, no change in the viscosity of the dispersion was observed for 1% GA sample. A small increase in the viscosity after heat treatment was noticed when 0.5% GA was used and a decrease in the viscosity after heat treatment when 2% GA was used.

Hence, the protein particles have shown good heat stability for all the GA concentrations tested. No particle aggregation was observed.

### EXAMPLE 4 - Stability at different pH

A dispersion of protein particles was prepared as described in example 1. During the washing and dispersing steps a 1% (w/w) Gum Arabic (GA) solution was used. In the final step protein particles were dispersed in 1% (w/w) GA solution at a weight to weight ratio of 1:2, giving a particle volume fraction of ∼ 35% and an overall protein concentration of 6-7 wt%.

The pH of the dispersion (6.96) was adjusted to either pH 7.00 (using 2M NaOH), pH 6.00 (using 6M HCl) or pH 5.00 (using 6M HCl). The dispersions with pH 7.00 and pH 6.00 are examples according to the invention and the dispersion with pH 5.00 is a comparative example. After pH adjustment the samples were stirred 30 min at room temperature.

The heat stability of these samples were tested as described Example 2. All the samples were stable before heating and no macroscopic phase separation could be observed. After heat treatment, the samples at pH 5 and 6 looked as 'coagulated' (with lumps visible by the eye), although they were still able to flow. The coagulated samples became homogenous again upon stirring. If not stirred phase separation was observed within a few hours.

With respect to particle size distribution, no change was observed in size distribution (D[3,2]: 3.8 µm) of particles prepared at pH 7 before and after heating. After pH adjustment to either 6 or 5, the size distribution of the non-heated samples was shifted to larger particle sizes. For pH 6, D [3,2] became 6.2 µm and for pH 5 it became 6.5 µm. After heating a further increase to 11.5 µm at pH 6 and to 32 µm at pH 5 was observed. The size distribution was bimodal and formation of aggregates in the size of a few hundred microns were measured.

Microscopic analysis revealed that the increase in the particle size after the pH change to either pH 5 or pH 6 was due to aggregation of the particles. After heat treatment of these samples larger clusters were observed.

Furthermore, no changes in the viscosity of the dispersions were observed at pH 7 before and after heating. Although there was aggregation of the particles at pH 6, the viscosity of this sample was not significantly influenced, suggesting that the particle clusters must be broken already at very low shear rates. We observed a shear-thinning in the sample at pH 5, confirming particle clustering. The viscosity of the particles at pH 5 after heating is lower in comparison to the viscosity at pH 7, suggesting that particles have shrunk at this pH.

Thus, without the intention to be bound by any theory, most likely due to the weak electrostatic repulsion between the particles at pH 6 and pH 5, some clustering between the protein particles was observed. It seems that this clustering is more extensive after heat treatment. However, this clustering seems to be rather weak, as indicated by the viscosity measurements. These measurements indicate that the clusters break-up at rather low shear rates.

In view of the above, it is clear that a lower pH of the dispersion according to the present invention, i.e. less than 6 is not preferred. It is particularly preferred to adjust the pH of the dispersion such that it has a pH of 6.5 to 8.

## Claims

1. An edible liquid dispersion comprising 10-40 vol.% aggregated protein particles in an aqueous phase comprising 0.05 to 5 wt% gum arabic, said aggregated protein particles comprising 5 to 70 wt% of protein and having an average diameter in the range of 0.1 to 20 µm, wherein said aggregated protein particles comprise gelled whey protein and wherein the pH of the edible dispersion is 6 to 9.

2. An edible dispersion according to claim 1, wherein the dispersion comprises 15 to 40 vol% aggregated protein particles.

3. An edible dispersion according to claim 1 or 2, wherein the aggregated protein particles comprise 15 to 70 wt% protein, preferably 15 to 50 wt% protein, most preferably 25 to 50 wt% protein.

4. An edible dispersion according to any of the previous claims, wherein the aggregated protein particles have an average diameter in the range of 1 to 10 µm.

5. An edible dispersion according to any of the previous claims, wherein the pH of the edible dispersion is 6.5 to 8.

6. An edible dispersion according to any of the previous claims, wherein the dispersion comprises 10-40 vol.% of aggregated protein particles in the aqueous phase and 0.05 to 5 wt% gum arabic, and wherein said aggregated protein particles comprise at least 15 wt% of protein and have an average diameter in the range of from 1 to 10 µm.

7. Method for preparing an edible protein dispersion comprising:
a) providing a solution or dispersion of whey proteins in a solvent;
b) providing an oil comprising an emulsifier;
c) preparing a solvent-in-oil emulsion comprising dispersed droplets of the solution or dispersion of protein by adding the solution or dispersion of protein provided in step (a) to the oil provided in step (b) and mixing the solution or dispersion with the oil;
d) treating the emulsion obtained in step (c) to cause aggregation of the protein to obtain a treated emulsion comprising aggregated protein particles in an oil phase;
e) removing oil from the treated emulsion; and
f) dispersing the protein particles in a solution of gum arabic in water such that a dispersion is obtained comprising 10-40 vol.% aggregated protein particles and 0.05 to 5 wt% gum arabic.

8. Method according to claim 7, wherein in step d) the proteins are aggregated by means of heat treatment, acidification, enzymatic treatment and/or chemical cross-linking.

9. Method according to claim 7 or 8, wherein an edible dispersion according to any of the claims 1-6 is obtained.

10. Food product comprising the dispersion according to any one of claims 1 to 6.

11. A food product according to claim 10 having a protein content of at least 7 wt%, preferably at least 15 wt%.

12. A food product according to claim 10 or 11, wherein the food product is a liquid food product.

13. A food product according to claim 12 having a viscosity in the range of from 1 to 10 mPa.s at a shear rate of 100 s⁻¹ at 25 °C.

14. Use of the dispersion according to any one of claims 1 to 6 for increasing the protein content of a food product.

## Patentansprüche

1. Essbare flüssige Dispersion, umfassend 10-40 Vol.-% aggregierte Proteinpartikel in einer wässrigen Phase, umfassend 0,05 bis 5 Gew.-% Gummiarabikum, wobei die aggregierten Proteinpartikel 5 bis 70 Gew.-% Protein enthalten und einen mittleren Durchmesser im Bereich von 0,1 bis 20 µm aufweisen, wobei die aggregierten Proteinpartikel geliertes Molkeprotein umfassen und der pH-Wert der essbaren Dispersion 6 bis 9 beträgt.

2. Essbare Dispersion nach Anspruch 1, wobei die Dispersion 15 bis 40 Vol.-% aggregierte Proteinpartikel enthält.

3. Essbare Dispersion nach Anspruch 1 oder 2, bei der die aggregierten Proteinpartikel 15 bis 70 Gew.-% Protein, vorzugsweise 15 bis 50 Gew.-% Protein und am meisten bevorzugt 25 bis 50 Gew.-% Protein enthalten.

4. Essbare Dispersion nach einem der vorhergehenden Ansprüche, bei der die aggregierten Proteinpartikel einen mittleren Durchmesser im Bereich von 1 bis 10 µm aufweisen.

5. Essbare Dispersion nach einem der vorhergehenden Ansprüche, bei der der pH-Wert der essbaren Dispersion 6,5 bis 8 beträgt.

6. Essbare Dispersion nach einem der vorhergehenden Ansprüche, wobei die Dispersion 10 bis 40 Vol.-% aggregierte Proteinpartikel in der wässrigen Phase und 0,05 bis 5 Gew.-% Gummiarabikum umfasst und die aggregierten Proteinpartikel wenigstens 15 Gew.-% Protein umfassen und einen mittleren Durchmesser im Bereich von 1 bis 10 µm haben.

7. Verfahren für die Herstellung einer essbaren Proteindispersion, umfassend:
a) Bereitstellen einer Lösung oder Dispersion von Molkeproteinen in einem Lösungsmittel;
b) Bereitstellen eines Öls, das einen Emulgator umfasst;
c) Herstellen einer Lösungsmittel-in-Öl-Emulsion, umfassend dispergierte Tröpfchen der Lösung oder Dispersion von Protein durch Zugabe der Lösung oder Dispersion von Protein, das in Schritt (a) bereitgestellt wird zu dem in Schritt (b) bereitgestellten Öl und Mischen der Lösung oder Dispersion mit dem Öl;
d) Behandeln der in Schritt (c) erhaltenen Emulsion, um eine Aggregation des Proteins zu bewirken, um eine behandelte Emulsion zu erhalten, die aggregierte Proteinpartikel in einer Ölphase umfasst;
e) Entfernen von Öl aus der behandelten Emulsion; und
f) Dispergieren der Proteinpartikel in einer Lösung von Gummiarabikum in Wasser, so dass man eine Dispersion erhält, die 10 bis 40 Vol.-% aggregierte Proteinpartikel und 0,05 bis 5 Gew.-% Gummiarabikum enthält.

8. Verfahren nach Anspruch 7, bei dem in Schritt d) die Proteine mittels Wärmebehandlung, Ansäuerung, enzymatische Behandlung und/oder chemische Vernetzung aggregiert werden.

9. Verfahren nach Anspruch 7 oder 8, bei dem man eine essbare Dispersion nach einem der Ansprüche 1 bis 6 erhält.

10. Nahrungsmittelprodukt, umfassend die Dispersion nach einem der Ansprüche 1 bis 6.

11. Nahrungsmittelprodukt nach Anspruch 10 mit einem Proteingehalt von wenigstens 7 Gew.-%, vorzugsweise wenigstens 15 Gew.-%.

12. Nahrungsmittelprodukt nach Anspruch 10 oder 11, wobei das Nahrungsmittelprodukt ein flüssiges Nahrungsmittelprodukt ist.

13. Nahrungsmittelprodukt nach Anspruch 12 mit einer Viskosität im Bereich von 1 bis 10 mPa.s bei einer Schergeschwindigkeit von 100 s⁻¹ bei 25°C.

14. Verwendung der Dispersion nach einem der Ansprüche 1 bis 6 zur Erhöhung des Proteingehalts eines Nahrungsmittelprodukts.

## Revendications

1. Dispersion liquide comestible comprenant 10 à 40 % en volume de particules de protéine agrégées dans une phase aqueuse comprenant 0,05 à 5 % en poids de gomme arabique, lesdites particules de protéine agrégées comprenant 5 à 70 % en poids de protéine et ayant un diamètre moyen dans la plage allant de 0,1 à 20 µm, dans laquelle lesdites particules de protéine agrégées comprennent une protéine de lactosérum gélifiée et dans laquelle le pH de la dispersion comestible est de 6 à 9.

2. Dispersion comestible selon la revendication 1, dans laquelle la dispersion comprend 15 à 40 % en volume de particules de protéine agrégées.

3. Dispersion comestible selon la revendication 1 ou 2, dans laquelle les particules de protéine agrégées comprennent 15 à 70 % en poids de protéine, de préférence 15 à 50 % en poids de protéine, de manière encore plus préférée 25 à 50 % en poids de protéine.

4. Dispersion comestible selon l'une quelconque des revendications précédentes, dans laquelle les particules de protéine agrégées ont un diamètre moyen dans une plage allant de 1 à 10 µm.

5. Dispersion comestible selon l'une quelconque des revendications précédentes, dans laquelle le pH de la dispersion comestible est de 6,5 à 8.

6. Dispersion comestible selon l'une quelconque des revendications précédentes, dans laquelle la dispersion comprend 10 à 40 % en volume de particules de protéine agrégées dans la phase aqueuse et 0,05 à 5 % en poids de gomme arabique, et dans laquelle lesdites particules de protéine agrégées comprennent au moins 15 % en poids de protéine et ont un diamètre moyen dans la plage allant de 1 à 10 µm.

7. Procédé pour préparer une dispersion de protéine comestible comprenant les étapes consistant à :
a) fournir une solution ou dispersion de protéines de lactosérum dans un solvant ;
b) fournir une huile comprenant un émulsifiant ;
c) préparer une émulsion solvant-dans-huile comprenant des gouttelettes dispersées de la solution ou dispersion de protéine en ajoutant la solution ou dispersion de protéine fournie à l'étape (a) à l'huile fournie à l'étape (b) et mélanger la solution ou dispersion avec l'huile ;
d) traiter l'émulsion obtenue à l'étape (c) pour provoquer une agrégation de la protéine afin d'obtenir une émulsion traitée comprenant des particules de protéine agrégées dans une phase d'huile ;
(e) retirer l'huile de l'émulsion traitée ; et
(f) disperser les particules de protéine dans une solution de gomme arabique dans de l'eau de telle sorte qu'une dispersion est obtenue comprenant 10 à 40 % en volume de particules de protéine agrégées et 0,05 à 5 % en poids de gomme arabique.

8. Procédé selon la revendication 7, dans lequel à l'étape d), les protéines sont agrégées par des moyens de traitement thermique, acidification, traitement enzymatique et/ou réticulation chimique.

9. Procédé selon la revendication 7 ou 8, dans lequel une dispersion comestible selon l'une quelconque des revendications 1 à 6 est obtenue.

10. Produit alimentaire comprenant la dispersion selon l'une quelconque des revendications 1 à 6.

11. Produit alimentaire selon la revendication 10, ayant une teneur en protéine d'au moins 7 % en poids, de préférence au moins 15 % en poids.

12. Produit alimentaire selon la revendication 10 ou 11, dans lequel le produit alimentaire est un produit alimentaire liquide.

13. Produit alimentaire selon la revendication 12 ayant une viscosité dans la plage allant de 1 à 10 mPa.s à un taux de cisaillement de 100 s⁻¹ à 25 °C.

14. Utilisation de la dispersion selon l'une quelconque des revendications 1 à 6 pour augmenter la teneur en protéine d'un produit alimentaire.
